# EUROPEAN PATENT SPECIFICATION

(11) **EP 4 381 905 B1**
(45) Date of publication and mention of the grant of the patent: **11.06.2025**
(21) Application number: 22760914.6
(22) Date of filing: 02.08.2022
(51) Int. Cl.: H05B 47/155, H04N 21/44, H04N 21/439, H04N 21/41, H04N 21/485

(54) **A CONTROLLER AND A METHOD FOR CONTROLLING LIGHTING UNITS OVER TIME BASED ON MEDIA CONTENT**
STEUERGERÄT UND VERFAHREN ZUR STEUERUNG VON BELEUCHTUNGSEINHEITEN IM LAUFE DER ZEIT AUF BASIS VON MEDIENINHALT
ORGANE DE COMMANDE ET PROCÉDÉ DE COMMANDE D'UNITÉS D'ÉCLAIRAGE DANS LE TEMPS SUR LA BASE D'UN CONTENU MULTIMÉDIA

(30) Priority: 06.08.2021 EP 21190105
(43) Date of publication of application: 12.06.2024
(73) Proprietor: Signify Holding B.V., 5656 AE Eindhoven (NL)
(72) Inventor: ALIAKSEYEU, Dzmitry Viktorovich, 5656 AE Eindhoven (NL); BORRA, Tobias, 5656 AE Eindhoven (NL); PULLES, Judocus, Nicolaas, 5656 AE Eindhoven (NL); VAN DER HEIJDEN, Gerardus Wilhelmus Theodorus, 5656 AE Eindhoven (NL)
(74) Representative: Verweij, Petronella Daniëlle
(86) International application number: PCT/EP2022/071676
(87) International publication number: WO 2023/012154

(56) References cited:
- WO-A1-2020/151993
- WO-A1-2020/249543
- WO-A1-2021/105044
- US-A1- 2020 245 435

## Description

### FIELD OF THE INVENTION

The invention relates to a method of controlling a plurality of lighting units over time according to light settings, which light settings are based on media content rendered on a media rendering device. The invention further relates to a computer program product for executing the method. The invention further relates to controller for controlling a plurality of lighting units over time according to light settings, which light settings are based on media content rendered on a media rendering device.

### BACKGROUND

Home entertainment lighting systems have proven to add a great deal to the experience of games, movies and music. For example, the use of light effects that match with and support media content can significantly enhance the media content. Light settings for controlling lighting units of the lighting system may be specified in a predefined light script, or be determined by analyzing the media content.

For certain media content it may be desirable that the light effects are more prominent, and have a higher level of dynamics. For instance for action movies, for dance music or for certain video games it may be desirable that the light effects are very dynamic to create an immersive experience, while for other media content (for instance for classical music or drama movies) it may be desirable that the light effects are present, but less dominant.

Present (home) entertainment lighting systems enable users to increase or reduce the level of dynamics of the light effects. A user may select the level of dynamics by selecting preset dynamic levels, or by setting the level of dynamics with a slider (e.g. on a touch user interface), a rotary button, one or more buttons, etc. Alternatively, the level of dynamics may be predetermined or be set automatically, for instance based on the type of media content.

When the level of dynamics has been set/selected, the light settings for the lighting units are adjusted based on the level of dynamics. In current systems, the level of difference of lighting parameters (brightness, color, hue, beam angle, etc.) are reduced if the level of dynamics is reduced, and/or the rate of change (i.e. the number of changes over time).

WO 2020/249543 A1 discloses a lighting system for downscaling a set of light settings and controlling a plurality of lighting units based on the downscaled light setting. The set of light settings may be based on media content.

### SUMMARY OF THE INVENTION

The invention discloses a method of controlling a plurality of lighting units according to the appended claim 1, a computer program product for a computing device according to the appended claim 14 and a controller for controlling a plurality of lighting units according to the appended claim 15. Further features of the claimed method are disclosed in the the appended dependant claims 2-13.

The inventors have realized that when all lighting parameters are reduced when a low (reduced) level of dynamics is set, the light effects may become uninteresting and thereby fail to provide added value to the media content. It is therefore an object of the present invention to provide a method for reducing the level of dynamics while maintaining a light effect that corresponds to the media content.

According to a first aspect of the present invention, the object is achieved by a method of controlling a plurality of lighting units over time according to light settings, which light settings are based on media content rendered on a media rendering device, the method comprising:
- receiving an input indicative of an adjustment of a level of dynamics, the level of dynamics being indicative of a level of difference of the brightness of the light settings over time and/or a rate of change of the brightness of the light settings over time,
- determining a color difference level based on the adjusted level of dynamics, wherein the color difference level is indicative of a level of difference of colors of the light settings over time and/or a rate of change of the colors of the light settings over time,
   wherein, when the level of dynamics is reduced, the color difference level is increased, and
- determining the light settings based on the adjusted level of dynamics and the determined color difference level, and
- controlling the plurality of lighting units over time according to the determined light settings.

The color difference level of the light settings is thus dependent on the level of dynamics. If the level of dynamics is reduced, the color difference level (e.g. the number of different colors, the difference between the colors, the rate of change of different colors over time per lighting unit, the contrast between colors, etc.) is increased. As such, when the light effects become less dynamic in terms of brightness changes, the difference in colors becomes more prominent. This is beneficial, because the perceived level of dynamics is reduced while a light effect that corresponds to the media content is maintained.

The increase of the color difference level may comprise: increasing, for one or more lighting units of the plurality of lighting units, the rate of change of the colors over time. In other words, the number of different colors per time unit is increased for the one or more lighting units of the plurality of lighting units. This is beneficial, because the perceived level of dynamics is reduced while a light effect that corresponds to the media content is maintained.

The increase of the color difference level may comprise: increasing the number of the colors by selecting colors of the light settings from a color palette. The method may further comprise: obtaining the color palette, for instance from a local or remote memory. The selection of the colors may be performed such that the contrast between the selected colors is increased. The color palette may comprise a number of colors (e.g. 5, 10, 20). The color palette may be based on the media content. The media content may be analyzed, and the color palette may be determined based on characteristics of the media content. Alternatively, the color palette may be predefined or user defined.

The method may further comprise: generating a plurality of additional colors for the color palette based on the colors of the color palette. The plurality of additional colors may be generated by extrapolating or interpolating the colors of the color palette.

The method may further comprise: determining whether the color difference level can be achieved using colors of the color palette, and the step of generating the plurality of additional colors for the color palette may be executed only if the color difference level cannot be achieved using colors of the color palette. This is beneficial when the color palette does not contain sufficiently different colors to meet the color difference level.

The color difference level may be decreased when the level of dynamics is increased. It may be beneficial to decrease the color difference level when the level of dynamics is increased, because then the brightness changes become more prominent. Alternatively, the (current) color difference level may be maintained when the level of dynamics is increased to keep the light effect consistent.

The method may further comprise: increasing the color difference level only when the level of dynamics is reduced below a threshold. If the level of dynamics is reduced, but does not exceed the threshold, the (current) color difference level may be maintained (until the level of dynamics is reduced below the threshold). The color difference level may for example only be increased for (very) low levels of dynamics.

The color difference level is determined as a function of the adjusted level of dynamics. Thus, when the level of dynamics is reduced, the color difference level is adjusted accordingly. The relation between the color difference level and the level of dynamics may for example be linear or exponential, or be defined by any other curve defining a relation between the color difference level and the level of dynamics.

The method may further comprise: obtaining position information indicative of the relative locations and/or orientations of the plurality of lighting units, and adjusting the color difference level further based on relative locations and/or orientations of the plurality of lighting units. For instance, if the plurality of lighting units are located closer to each other, the color difference level may be decreased, while if the plurality of lighting units are located further away from each other, the color difference level may be increased.

The method may further comprise: obtaining position information indicative of the locations and/or orientations of the plurality of lighting units relative to a user, and adjusting the color difference level further based on the locations and/or orientations of the plurality of lighting units relative to the user. For instance, if the plurality of lighting units are located closer to the user, the color difference level may be decreased, while if the plurality of lighting units are located further away from the user, the color difference level may be increased.

The method may further comprise: adjusting the color difference level further based on one or more properties of the media content. If, for example, the media content is video content which comprises saturated colors, the color difference level may be increased, while if the media content is video content which comprises desaturated colors, the color difference level may be decreased.

The input may be a user input received via a user interface. This enables the user to set the level of dynamics. Alternatively, the input may be received from another source, for instance from a central lighting control system, the media rendering device, one or more sensors, etc.

According to a second aspect of the present invention, the object is achieved by a computer program product for a computing device, the computer program product comprising computer program code to perform any of the above-mentioned methods when the computer program product is run on a processing unit of the computing device.

According to a third aspect of the present invention, the object is achieved by a controller for controlling a plurality of lighting units over time according to light settings, which light settings are based on media content rendered on a media rendering device, controller comprising:
- a communication unit configured to communicate with the plurality of lighting units,
- an input unit configured to receive an input indicative of an adjustment of a level of dynamics, the level of dynamics being indicative of a level of difference of the brightness of the light settings over time and/or a rate of change of the brightness of the light settings over time,
- a processor configured to determine a color difference level based on the adjusted level of dynamics, wherein the color difference level is indicative of a level of difference of colors of the light settings over time and/or a rate of change of the colors of the light settings over time, wherein, when the level of dynamics is reduced, the color difference level is increased, and to adjust the light settings based on the adjusted level of dynamics and the determined color difference level, and to control, via the communication unit, the plurality of lighting units over time according to the determined light settings.

It should be understood that the computer program product and the controller may have similar and/or identical embodiments and advantages as the above-mentioned methods.

### BRIEF DESCRIPTION OF THE DRAWINGS

The above, as well as additional objects, features and advantages of the disclosed systems, devices and methods will be better understood through the following illustrative and non-limiting detailed description of embodiments of devices and methods, with reference to the appended drawings, in which:
Fig. 1 shows schematically an example of a system comprising a controller, a plurality of lighting units and a media rendering device;
Fig. 2. shows schematically a graph illustrating a function of the level of dynamics and the color difference level;
Fig. 3 shows schematically another graph illustrating a curve defining a relation between the color difference level and the level of dynamics;
Fig. 4 shows schematically a user interface for receiving a user input indicative of a level of dynamics; and
Fig. 5 shows schematically a method of controlling a plurality of lighting units over time according to light settings based on media content.

All the figures are schematic, not necessarily to scale, and generally only show parts which are necessary in order to elucidate the invention, wherein other parts may be omitted or merely suggested.

### DETAILED DESCRIPTION

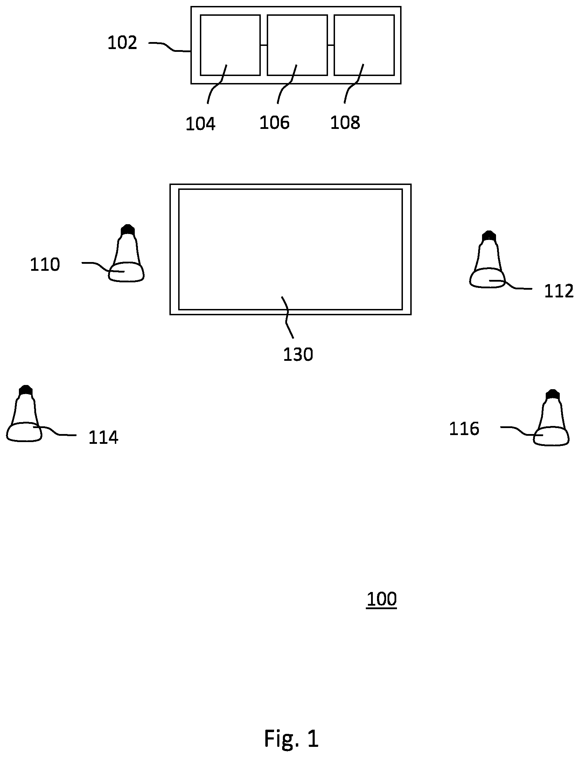

Fig. 1 shows schematically an example of a system 100 comprising a controller 102, a media rendering device 130 and a plurality of lighting units 110, 112, 114, 116. The controller 102 is configured to control the plurality of lighting units 110, 112, 114, 116 based on media content rendered on the media rendering device 130. The controller comprises a communication unit 104, an input unit 108 and a processor 106. The communication unit 104 is configured to communicate with the plurality of lighting units. The input unit 108 is configured to receive an input indicative of an adjustment of a level of dynamics, the level of dynamics indicative of a level of difference of the brightness of the light settings and/or a rate of change of the brightness of the light settings over time. The processor 106 (e.g. a microchip, circuitry, a microcontroller, etc.) is configured to determine a color difference level based on the adjusted level of dynamics. The color difference level is indicative of a level of difference of colors of the light settings and/or a rate of change of the colors of the light settings over time (according to which the lighting units are to be controlled). The processor 106 is configured to, when the level of dynamics is reduced based on the input, increase the color difference level. The processor 106 is further configured to determine the light settings (according to which the plurality of lighting units 110, 112, 114, 116 are to be controlled) based on the adjusted level of dynamics and the determined color difference level, and to control, via the communication unit 104, the plurality of lighting units over time according to the determined light settings while the media content is being rendered on the media rendering device 130.

The controller 102 may be comprised in any type of device for controlling the lighting units 110, 112, 114, 116. The controller 102 may, for example, be comprised in a personal device such as a smartphone, a smartwatch, a tablet pc. The controller 102 may be comprised in a central control device such as a central home control system, a bridge device, etc. In other examples, the controller 102 may be comprised in the media rendering device 130. In other examples, the controller 102 may be located on a remote server configured to communicate with the lighting units 110, 112, 114, 116 via a network (e.g. via the internet).

The controller 102 is configured to control the plurality of lighting units 110, 112, 114, 116. The controller 102 comprises the communication unit 104 (such as a transmitter, a transceiver) configured to communicate lighting control commands to the plurality of lighting units 110, 112, 114, 116 to control the light output of the plurality of lighting units 110, 112, 114, 116 over time. The communication unit 104 may comprise hardware for transmitting the control command via any wired or wireless communication protocol. Various wired and wireless communication protocols may be used, for example Ethernet, DMX, DALI, USB, Bluetooth, Wi-Fi, Li-Fi, 3G, 4G, 5G or ZigBee. The lighting units of the plurality of lighting units 110, 112, 114, 116 comprise one or more receiver configured to receive the control commands, and one or more processing units configured to adjust the light output of the respective lighting unit(s). The lighting units comprise a plurality of (LED) light sources which are controlled by the respective processing units. The lighting units may be light bulbs, light strips, segments of light strips, luminaires, etc. The lighting units are configured to provide ambient and/or general illumination

The processor 106 (e.g. a single processor or a plurality of distributed processors) may be configured to analyze the media content to generate light settings based on the media content. Alternatively, a remote processor may analyze the media content to generate light settings based on the media content, and communicate the light settings to the controller 102. Such generation of light settings based on media content is known in the art and will therefore not be discussed in detail. The processor 106 may be configured to analyze one or more upcoming parts of the media content (e.g. upcoming video scenes or images, upcoming game events, upcoming audio/songs, etc.) and analyze the one or more upcoming parts to generate the one or more light settings based on the media content. The upcoming parts may be buffered (i.e. temporarily stored) in a memory (not shown) when the media content is streamed. The processor 106 may control the lighting units when the upcoming parts are rendered on the media rendering device 130. The processor 106 may be configured to temporarily store the generated one or more light settings in a memory, and the processor 106 may be configured to remove the stored light settings from the memory after the associated part of the media content has been rendered by the media rendering device 130.

Additionally or alternatively, the processor 106 may be configured to obtain a light script associated with the media content. The light script may comprise predefined light settings (e.g. color, saturation, brightness, beam width/size, etc.) according to which the lighting units are to be controlled over time while the media content is being rendered on the media rendering device 130. The light script may be stored in an internal memory, and the input unit 108 may be an input of the processor 106, and the processor 106 may obtain the light script from the memory via the input unit 108. Alternatively, the input unit 108 may be a receiver and the light script may be streamed to the input unit 108. The light script may be divided in multiple parts, and upcoming parts (i.e. parts that correspond to upcoming media content that has not yet been rendered) may be buffered in a memory (not shown). This prevents disruptions if there are momentary delays in transmission of the light script from the remote server.

The media rendering device 130 may, for example, be a television, a projector, an audio system, a pc, etc. The media rendering device 130 may be a portable device, such as a smartphone, a tablet pc, etc., or a wearable device such as an (AR) headset, smartglasses, smartwatch, headphones, etc.

The media content may be video content (e.g. a movie, a video clip, a news broadcast, etc.). The video content may be streamed from a video streaming platform. The processor 106 may be configured to analyze the video content and generate the one or more light settings by extracting color information, saturation information and/or brightness information from the video content. Alternatively, a remote processor may analyze the video content to generate light settings based on the video content, and communicate the light settings to the controller 102. The processor 106 may be configured to analyze images/scenes of the video content to extract color, saturation and/or brightness levels from the images, and control lighting units based on these levels. Techniques for extracting such information from video content is known in the art, and will therefore not be discussed in detail. Additionally or alternatively, the processor 106 may be configured to obtain a light script associated with the video content, which light script defines the light settings.

The media content may be audio content (e.g. a song, an audiobook, etc.). The audio content may be streamed from a music streaming platform. The processor 106 may be configured to analyze the audio content and generate the one or more light settings based on one or more audio characteristics of the audio content. Alternatively, a remote processor may analyze the audio content to generate light settings based on the audio content, and communicate the light settings to the controller 102. The audio characteristics may, for example, comprise one or more of: beat, timbre, pitch, intensity, rhythm, major and minor key. Additionally, or alternatively the one or more audio characteristics may comprise audio features. The audio features may comprise direct mood, valence and arousal/energy. Direct mood may be estimated using set of mood labels (which may be user-defined or automatically generated). A combination of valence and arousal may be used for defining mood. Techniques for extracting such information from audio content is known in the art, and will therefore not be discussed in detail. Additionally or alternatively, the processor 106 may be configured to obtain a light script associated with the audio content, which light script defines the light settings.

The media content may be video game content. The video game content may be streamed from a video game streaming platform (e.g. a cloud gaming platform). The processor 106 may be configured to analyze the video game content and generate the one or more light settings by extracting color information, saturation information and/or brightness information form the game content. Alternatively, a remote processor may analyze the video game content to generate light settings based on the video game content, and communicate the light settings to the controller 102. Additionally or alternatively, the processor 106 may be configured to generate the one or more light settings based on one or more game events of the game content. Similar to the above-mentioned video analysis, images/scenes of the video game content may be analyzed to extract color, saturation and/or brightness levels from the images, and the one or more lighting units may be controlled based on these levels. Additionally or alternatively, (predefined) game events of the game content may be accessible, and these (predefined) game events (e.g. explosions, change of scenery, opening of a door, etc.) may be analyzed by the processor 106. Color, saturation and/or brightness levels may, for example, be extracted from the game events, and the processor 106 may control the lighting units accordingly. Alternatively, game events may be associated with predefined light settings, and the processor 106 may control the lighting units based on the predefined light settings. Techniques for extracting such information from game content is known in the art, and will therefore not be discussed in detail. Additionally or alternatively, the processor 106 may be configured to obtain a light script associated with the video game content, which light script defines the light settings.

The input unit 108 is configured to receive an input indicative of an adjusted level of dynamics. The adjusted level of dynamics may be a target level of dynamics, different from a current/previous level of dynamics. The input indicative of the adjustment may be a change of the level of dynamics from a current/previous level of dynamics to a target/desired level of dynamics. The input unit 108 is communicatively coupled to the processor 106. The input unit 108 may be a receiver (e.g. part of the communication unit 104) configured to receive a (wireless) control signal indicative of the adjusted level of dynamics. Alternatively, the input unit 108 may be a user interface configured to receive a user input indicative of the adjustment of the level of dynamics. Alternatively, the input unit 108 may be an input to the processor 106 and configured obtain the adjusted level of dynamics from a memory stored in the controller.

The processor 106 is configured to determine a color difference level based on the adjusted level of dynamics. The color difference level is indicative of a level of difference of colors of the light settings (e.g. differences between colors of light settings according to which the plurality of lighting units 110, 112, 114, 116 are to be controlled) and/or a rate of change of the colors of the light settings over time (e.g. a frequency at which the lighting units change color). The level of difference between colors may be defined by a contrast between the colors. The level of difference between colors may be defined by the colors hue and/or saturation. The level of difference may be defined as a distance between colors in a color spectrum (e.g. a CIE color diagram, a color circle, etc.) or for example be defined as a difference in color values (e.g. RGB values, Lab values, etc.).

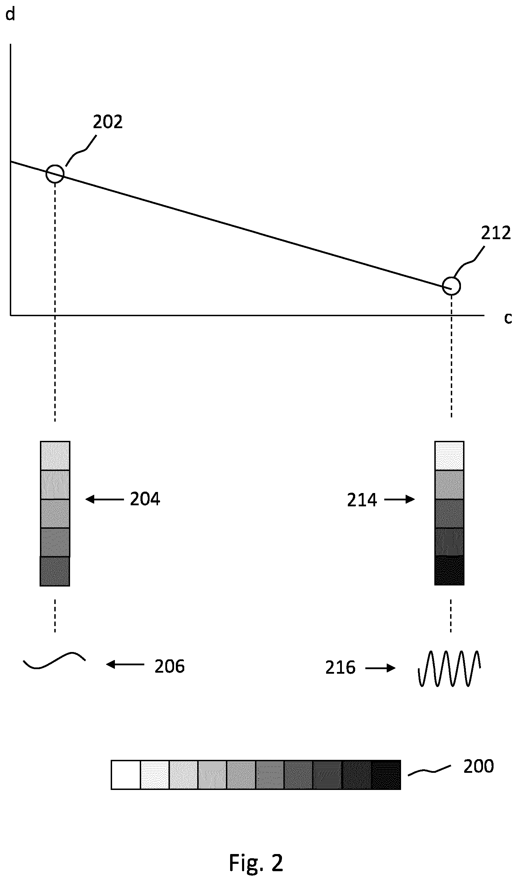

The processor 106 is configured to determine the color difference level such that when the level of dynamics is reduced, the color difference level is increased. This is exemplified in Fig. 2. The graph shows a function of the level of dynamics d and the color difference level c. If the level of dynamics d is higher, the level of dynamics the color difference level c is lower. For a first level of dynamics 202, the processor 106 may determine a plurality of first colors 204 according to which the lighting units 110, 112, 114, 116 are to be controlled, and/or determine a first rate of change 206 of the colors of the light settings according to which the lighting units 110, 112, 114, 116 are to be controlled. When the input indicative of an adjustment of the level of dynamics is received (wherein the level of dynamics is set to a reduced second level of dynamics 212) the processor 106 may determine a plurality of second colors 214 according to which the lighting units 110, 112, 114, 116 are to be controlled, and/or determine a second rate of change 216 of the colors of the light settings according to which the lighting units 110, 112, 114, 116 are to be controlled. The color difference level of the second colors 214 is higher than the color difference level of the first colors 204, and/or the second rate of change 216 is higher than the first rate of change 206. A higher color difference level would result in more different colors over time. The colors may be selected from a color palette, for instance from color palette 200. The processor 106 may determine the light settings for the lighting units 110, 112, 114, 116 based on the second colors 214 and/or the second rate, and control the plurality of lighting units 110, 112, 114, 116 over time according to the determined light settings. The processor 106 may, for instance, select colors from the second colors 214 and control the lighting units 110, 112, 114, 116 according to these colors over time. Additionally or alternatively, the processor 106 may increase the rate of change based on the second rate of change 216.

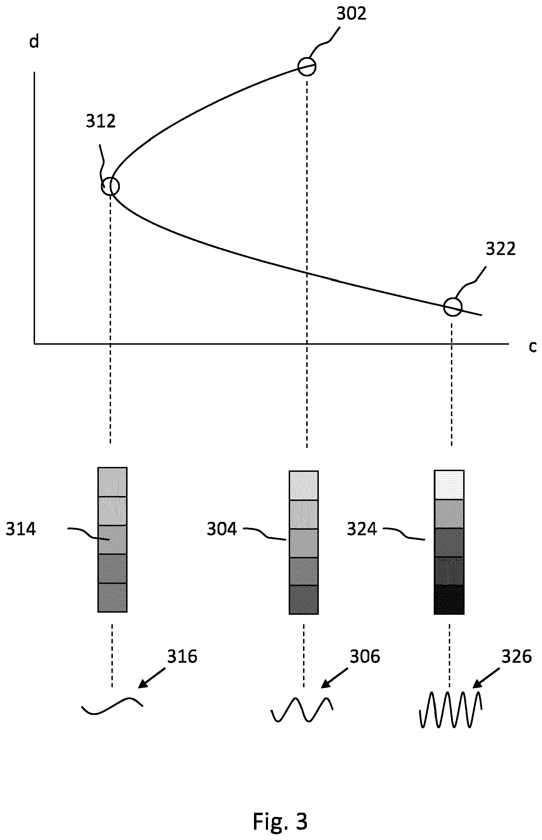

In the example of Fig. 2, the color difference level is determined as a function of the adjusted level of dynamics. Thus, when the level of dynamics is reduced, the color difference level is adjusted accordingly. The relation between the color difference level and the level of dynamics may be linear, exponential or have a specific curve (see Fig. 3). Alternatively, a plurality of discrete associations between level of dynamics and color difference levels may be stored in a memory (e.g. local or remote) and be accessible by the processor 106.

The processor 106 may be configured to (a) determine a first color difference level for a first level of dynamics, (b) determine a second color difference level for a second level of dynamics wherein the second level of dynamics is lower than the first level of dynamics and the second color difference level is lower than the first color difference level and (c) determine a third color difference level for a third level of dynamics wherein the third level of dynamics is lower than the second level of dynamics and the third color difference level is higher than the second color difference level and/or the first color difference level.

The processor 106 may be configured to determine the color difference level based on a curve that defines a relation between the color difference levels and levels of dynamics. Fig. 3 shows an example of a graph that defines a relation between the level of dynamics d and the color difference level c. For a first level of dynamics 302, the processor 106 may determine a plurality of first colors 304 and/or determine a first rate of change 306 of the colors of the light settings according to which the lighting units 110, 112, 114, 116 are to be controlled. For a second level of dynamics 312 (lower than the first level of dynamics 302), the processor 106 may determine a plurality of second colors 314 (with a lower color difference level than the plurality of first colors 304) and/or a second rate 316 of change (lower than the first rate of change 304) of the colors of the light settings. For a third level of dynamics 322 (lower than the second level of dynamics 312), the processor 106 may determine a plurality of third colors 324 (with a higher color difference level than the plurality of second colors 314) and/or a third rate of change 326 (higher than the second rate of change 316) of the colors of the light settings. Depending on the inputted level of dynamics, the processor 106 may determine the color difference level based on the curve and determine the colors of the light settings and/or the rate of change of the colors of the light settings accordingly. It should be understood that the graphs and the curves of Fig. 2 and Fig. 3 are merely examples, and that the skilled person is able to design alternatives without departing from the scope of the appended claims.

The processor 106 is configured to determine the light settings based on the adjusted level of dynamics and the determined color difference level, and to control, via the communication unit 104, the plurality of lighting units 110, 112, 114, 116 over time according to the determined light settings. The processor 106 may, for example, reduce the level of difference of the brightness of the light settings and/or a rate of change of the brightness of the light settings over time based on the adjusted level of dynamics. If the level of dynamics is reduced, the difference in brightness (intensity) of the different light settings that are mapped onto the plurality of lighting units 110, 112, 114, 116 is also reduced. Controlling lighting units by changing the brightness over time based on a level of dynamics is known in the art and will therefore not be discussed in detail.

The processor 106 may be further configured to obtain a color palette and determine the colors of the light settings by selecting the colors of the light settings from the color palette based on the color difference. Fig. 2 illustrates an example of a color palette 200. The plurality of first colors 204 (based on a first color difference level 202) and the plurality of second colors 214 (based on a second color difference level 212) may be selected from the color palette 200 by the processor 106.

The color palette may be based on the media content rendered on the media rendering device 130. The processor 106 may be configured to analyze the media content and determine the color palette based thereon (as described above). The processor 106 may be configured to continuously analyze the media content (e.g. for sets of video frames, for movie scenes, for video game events, for audio sections, etc.) to update the color palette. Alternatively, the color palette may be predefined or user defined.

The processor 106 may be further configured to generate a plurality of additional colors for the color palette based on the colors of the color palette. The plurality of additional colors may be determined by extrapolating or interpolating the colors of the color palette. The processor 106 may be further configured to determine whether the color difference level can be achieved using colors of the color palette, and generate the plurality of additional colors for the color palette only if the color difference level cannot be achieved using colors of the color palette. The processor 106 may, for example, the processor 106 may generate the additional colors by selecting additional colors (e.g. from a color spectrum) with different hues and/or saturations to increase the number of colors in the color palette. Additionally or alternatively, the processor 106 may generate the additional colors by adjusting the saturations of colors of the color palette.

The processor 106 may be configured to decrease the color difference level when the level of dynamics is increased when the input is received. The input may be indicative of an increase of a level of dynamics. The processor 106 may decrease the color difference level when the level of dynamics is increased when the input is received.

The processor 106 may be configured to increase the color difference level only when the level of dynamics is reduced below a threshold. If the level of dynamics is reduced, but does not exceed the threshold, the current color difference level may be maintained until the level of dynamics is reduced below the threshold. The color difference level may for example only be increased for very low levels of dynamics, wherein the brightness changes over time are hardly noticeable.

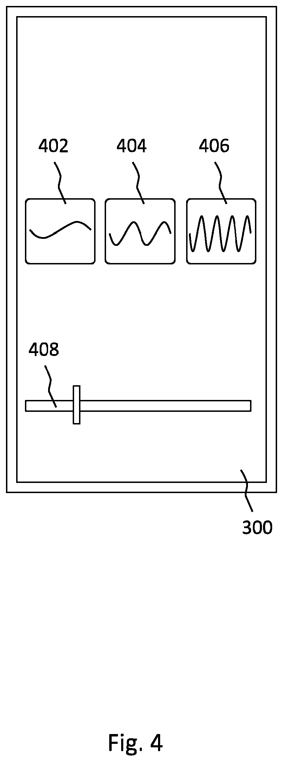

The input indicative of the adjustment of the level of dynamics may be received from various sources. In a first example, the input may be a user input received via a user interface (e.g. a touch-sensitive user interface, a voice interface, a button interface, a gesture interface, etc.). Fig. 4 illustrates a user interface comprising a touchscreen 400 for receiving user input indicative of a selection of the level of dynamics. The user may, for example, select one of several (discrete) presets 402, 404, 406, each indicative of a level of dynamics (low, medium and high, respectively). Additionally or alternatively, the user interface may for instance comprise a slider 408 for setting the level of dynamics. In another example, the input may be received from a central lighting control system. The central lighting control system may be configured to set limitations to the level of dynamics, and communicate the adjustment of the level of dynamics to the controller 102. The limitations may be due to lighting control routines, based on user preferences, based on system limitations, etc. In another example, the input may be received from a software application related to the media content. The software application may be configured to analyze the media content, and to determine the level of dynamics based on the media content.

The processor 106 may be further configured to adjust the color difference level based on one or more parameters. These parameters may be related to the relative positions of the lighting units 110, 112, 114, 116, the media rendering device 130 and/or the user. Additionally or alternatively, the parameters may be related to the media content rendered on the media rendering device 130. The processor 106 may be configured to obtain information about the parameters from a memory comprised in the controller 102, or from a remote system such as a positioning system, a media streaming service, via a user interface operated by the user, etc. Methods for obtaining this information are known in the art and will therefore not be discussed in detail. In a first example, the processor 106 may be configured to obtain position information indicative of the relative locations and/or orientations of the plurality of lighting units 110, 112, 114, 116, and adjust the color difference level further based on relative locations and/or orientations of the plurality of lighting units 110, 112, 114, 116. For instance, if the plurality of lighting units are located closer to each other, the color difference level may be decreased, while if the plurality of lighting units are located further away from each other, the color difference level may be increased. In another example, the processor 106 may be configured to obtain position information indicative of the locations and/or orientations of the plurality of lighting units relative to a user, and adjust the color difference level further based on the locations and/or orientations of the plurality of lighting units relative to the user. For instance, if the plurality of lighting units are located closer to the user, the color difference level may be decreased, while if the plurality of lighting units are located further away from the user, the color difference level may be increased. In another example, the processor 106 may be configured to adjust the color difference level further based on one or more properties of the media content. If, for example, the media content is video content which comprises saturated colors, the color difference level may be increased, while if the media content is video content which comprises desaturated colors, the color difference level may be decreased. If, for example, the media content is calm audio content (e.g. ambient sounds), the color difference level may be decreased, while if the media content is energetic audio content (e.g. dance music) which comprises desaturated colors, the color difference level may be increased.

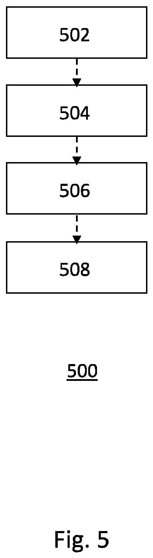

Fig. 5 shows schematically a method 500 of controlling a plurality of lighting units over time according to light settings based on media content. The method 500 comprises:
- receiving 502 an input indicative of an adjustment of a level of dynamics, the level of dynamics being indicative of a level of difference of the brightness of the light settings and/or a rate of change of the brightness of the light settings over time,
- determining 504 a color difference level based on the adjusted level of dynamics, wherein the color difference level is indicative of a level of difference of colors of the light settings and/or a rate of change of the colors of the light settings over time,
   wherein, when the level of dynamics is reduced, the color difference level is increased, and
- determining 506 the light settings based on the adjusted level of dynamics and the determined color difference level, and
- controlling 508 the plurality of lighting units over time according to the determined light settings.

The method 500 may be executed by computer program code of a computer program product when the computer program product is run on a processing unit of a computing device, such as the processor 106 of the controller 102.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors or even the 'cloud'.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A method (500) of controlling a plurality of lighting units over time according to light settings, which light settings are based on media content rendered on a media rendering device, the method (500) comprising:
- receiving (502) an input indicative of an adjustment of a level of dynamics, the level of dynamics being indicative of a level of difference of the brightness of the light settings over time and/or a rate of change of the brightness of the light settings over time,
- determining (504) a color difference level based on the adjusted level of dynamics, wherein the color difference level is indicative of a level of difference of colors of the light settings over time and/or a rate of change of the colors of the light settings over time,
wherein, when the level of dynamics is reduced, the color difference level is increased, and
- determining (506) the light settings based on the adjusted level of dynamics and the determined color difference level, and
- controlling (508) the plurality of lighting units over time according to the determined light settings.

2. The method (500) of claim 1, wherein the increase of the color difference level comprises: increasing, for one or more lighting units of the plurality of lighting units, the rate of change of the colors over time.

3. The method (500) of claim 1 or 2, wherein the increase of the color difference level comprises: increasing the number of the colors by selecting colors of the light settings from a color palette.

4. The method (500) of claim 3, wherein the method (500) further comprises:
- generating a plurality of additional colors for the color palette based on the colors of the color palette.

5. The method (500) of claim 4, wherein the plurality of additional colors are generated by extrapolating or interpolating the colors of the color palette.

6. The method (500) of claim 4 or 5, wherein the method (500) further comprises:
- determining whether the color difference level can be achieved using colors of the color palette, and wherein the step of generating the plurality of additional colors for the color palette is executed if the color difference level cannot be achieved using colors of the color palette.

7. The method (500) of any preceding claim, wherein color difference level is decreased when the level of dynamics is increased.

8. The method (500) of any preceding claim, wherein the method (500) comprises:
- increasing the color difference level only when the level of dynamics is reduced below a threshold.

9. The method (500) of any preceding claim, wherein the color difference level is determined as a function of the adjusted level of dynamics.

10. The method (500) of any preceding claim, wherein the method (500) comprises:
- obtaining position information indicative of the relative locations and/or orientations of the plurality of lighting units, and
- adjusting the color difference level further based on relative locations and/or orientations of the plurality of lighting units.

11. The method (500) of any preceding claim, wherein the method (500) comprises:
- obtaining position information indicative of the locations and/or orientations of the plurality of lighting units relative to a user, and
- adjusting the color difference level further based on the locations and/or orientations of the plurality of lighting units relative to the user.

12. The method (500) of any preceding claim, wherein the method (500) comprises:
- adjusting the color difference level further based on one or more properties of the media content.

13. The method (500) of any preceding claim, wherein the input is a user input received via a user interface.

14. A computer program product for a computing device, the computer program product comprising computer program code to perform the method (500) of any preceding claim when the computer program product is run on a processing unit of the computing device.

15. A controller (102) for controlling a plurality of lighting units (110, 112, 114, 116) over time according to light settings, which light settings are based on media content rendered on a media rendering device (130), controller (102) comprising:
- a communication unit (104) configured to communicate with the plurality of lighting units (110, 112, 114, 116),
- an input unit (108) configured to receive an input indicative of an adjustment of a level of dynamics, the level of dynamics being indicative of a level of difference of the brightness of the light settings over time and/or a rate of change of the brightness of the light settings over time,
- a processor (106) configured to determine a color difference level based on the adjusted level of dynamics, wherein the color difference level is indicative of a level of difference of colors of the light settings over time and/or a rate of change of the colors of the light settings over time, wherein, when the level of dynamics is reduced, the color difference level is increased, and to adjust the light settings based on the adjusted level of dynamics and the determined color difference level, and to control, via the communication unit (104), the plurality of lighting units (110, 112, 114, 116) over time according to the determined light settings.

## Patentansprüche

1. Verfahren (500) zum Steuern einer Vielzahl von Beleuchtungseinheiten im Verlauf der Zeit gemäß Lichteinstellungen, wobei die Lichteinstellungen auf Medieninhalten basieren, die auf einer Medienwiedergabevorrichtung wiedergegeben werden, wobei das Verfahren (500) umfasst:
- Empfangen (502) einer Eingabe, die eine Anpassung eines Dynamikniveaus angibt, wobei das Dynamikniveau ein Differenzniveau der Helligkeit der Lichteinstellungen im Verlauf der Zeit und/oder eine Änderungsrate der Helligkeit der Lichteinstellungen im Verlauf der Zeit angibt,
- Bestimmen (504) eines Farbdifferenzniveaus basierend auf dem angepassten Dynamikniveau, wobei das Farbdifferenzniveau ein Differenzniveau der Farben der Lichteinstellungen im Verlauf der Zeit und/oder eine Änderungsrate der Farben der Lichteinstellungen im Verlauf der Zeit angibt,
wobei, wenn das Dynamikniveau reduziert wird, das Farbdifferenzniveau erhöht wird, und
- Bestimmen (506) der Lichteinstellungen basierend auf dem angepassten Dynamikniveau und dem bestimmten Farbdifferenzniveau, und
- Steuern (508) der Vielzahl von Beleuchtungseinheiten im Verlauf der Zeit gemäß den bestimmten Lichteinstellungen.

2. Verfahren (500) nach Anspruch 1, wobei die Erhöhung des Farbdifferenzniveaus umfasst: Erhöhen der Änderungsrate der Farben im Verlauf der Zeit für eine oder mehrere Beleuchtungseinheiten der Vielzahl von Beleuchtungseinheiten.

3. Verfahren (500) nach Anspruch 1 oder 2, wobei die Erhöhung des Farbdifferenzniveaus umfasst: Erhöhen der Anzahl der Farben durch Auswählen der Farben der Lichteinstellungen aus einer Farbpalette.

4. Verfahren (500) nach Anspruch 3, wobei das Verfahren (500) ferner umfasst:
- Erzeugen einer Vielzahl zusätzlicher Farben für die Farbpalette basierend auf den Farben der Farbpalette.

5. Verfahren (500) nach Anspruch 4, wobei die Vielzahl zusätzlicher Farben durch Extrapolation oder Interpolation der Farben der Farbpalette erzeugt wird.

6. Verfahren (500) nach Anspruch 4 oder 5, wobei das Verfahren (500) ferner umfasst:
- Bestimmen, ob das Farbdifferenzniveau unter Verwendung von Farben der Farbpalette erreicht werden kann, und wobei der Schritt des Erzeugens der Vielzahl von zusätzlichen Farben für die Farbpalette ausgeführt wird, wenn das Farbdifferenzniveau unter Verwendung von Farben der Farbpalette nicht erreicht werden kann.

7. Verfahren (500) nach einem der vorstehenden Ansprüche, wobei das Farbdifferenzniveau verringert wird, wenn das Dynamikniveau erhöht wird.

8. Verfahren (500) nach einem der vorstehenden Ansprüche, wobei das Verfahren (500) umfasst:
- Erhöhen des Farbdifferenzniveaus nur, wenn das Dynamikniveau unter einen Schwellenwert reduziert wird.

9. Verfahren (500) nach einem der vorstehenden Ansprüche, wobei das Farbdifferenzniveau in Abhängigkeit von dem angepassten Dynamikniveau bestimmt wird.

10. Verfahren (500) nach einem der vorstehenden Ansprüche, wobei das Verfahren (500) umfasst:
- Erhalten von Positionsinformationen, die die relativen Standorte und/oder Orientierungen der Vielzahl von Beleuchtungseinheiten angeben, und
- weiteres Anpassen des Farbdifferenzniveaus basierend auf den relativen Standorten und/oder Orientierungen der Vielzahl von Beleuchtungseinheiten.

11. Verfahren (500) nach einem der vorstehenden Ansprüche, wobei das Verfahren (500) umfasst:
- Erhalten von Positionsinformationen, die die Standorte und/oder Orientierungen der Vielzahl von Beleuchtungseinheiten relativ zu einem Benutzer angeben, und
- Anpassen des Farbdifferenzniveaus ferner basierend auf den Standorten und/oder Orientierungen der Vielzahl von Beleuchtungseinheiten relativ zu dem Benutzer.

12. Verfahren (500) nach einem der vorstehenden Ansprüche, wobei das Verfahren (500) umfasst:
- Anpassen des Farbdifferenzniveaus basierend auf einer oder mehreren Eigenschaften der Medieninhalte.

13. Verfahren (500) nach einem der vorstehenden Ansprüche, wobei die Eingabe eine Benutzereingabe ist, die über eine Benutzerschnittstelle empfangen wird.

14. Computerprogrammprodukt für eine Rechenvorrichtung, wobei das Computerprogrammprodukt einen Computerprogrammcode umfasst, um das Verfahren (500) nach einem der vorstehenden Ansprüche durchzuführen, wenn das Computerprogrammprodukt auf einer Verarbeitungseinheit der Rechenvorrichtung ausgeführt wird.

15. Steuerung (102) zum Steuern einer Vielzahl von Beleuchtungseinheiten (110, 112, 114, 116) im Verlauf der Zeit gemäß Lichteinstellungen, wobei die Lichteinstellungen auf Medieninhalten basieren, die auf einer Medienwiedergabevorrichtung (130) wiedergegeben werden, wobei das Verfahren (102) umfasst:
- eine Kommunikationseinheit (104), die konfiguriert ist, um mit der Vielzahl von Beleuchtungseinheiten (110, 112, 114, 116) zu kommunizieren,
- eine Eingabeeinheit (108), die konfiguriert ist, um eine Eingabe zu empfangen, die eine Anpassung eines Dynamikniveaus angibt, wobei das Dynamikniveau ein Differenzniveau der Helligkeit der Lichteinstellungen im Verlauf der Zeit und/oder eine Änderungsrate der Helligkeit der Lichteinstellungen im Verlauf der Zeit angibt,
- einen Prozessor (106), der konfiguriert ist, um ein Farbdifferenzniveau basierend auf dem angepassten Dynamikniveau zu bestimmen, wobei das Farbdifferenzniveau ein Farbdifferenzniveau der Lichteinstellungen im Verlauf der Zeit und/oder eine Änderungsrate der Farben der Lichteinstellungen im Verlauf der Zeit angibt, wobei das Farbdifferenzniveau erhöht wird, wenn das Dynamikniveau reduziert wird, und die Lichteinstellungen basierend auf dem angepassten Dynamikniveau und dem bestimmten Farbdifferenzniveau anzupassen und über die Kommunikationseinheit (104) die Vielzahl von Beleuchtungseinheiten (110, 112, 114, 116) im Verlauf der Zeit gemäß den bestimmten Lichteinstellungen zu steuern.

## Revendications

1. Procédé (500) de commande d'une pluralité d'unités d'éclairage dans le temps selon des réglages de lumière, ces réglages de lumière sont basés sur un contenu multimédia restitué sur un dispositif de rendu multimédia, le procédé (500) comprenant :
- la réception (502) d'une entrée indiquant un ajustement d'un niveau de dynamique, le niveau de dynamique indiquant un niveau de différence de la luminosité des réglages de lumière dans le temps et/ou un taux de changement de la luminosité des réglages de lumière dans le temps,
- la détermination (504) d'un niveau de différence des couleurs sur la base du niveau de dynamique ajusté, dans lequel le niveau de différence de couleur indique un niveau de différence des couleurs des réglages de lumière dans le temps et/ou un taux de changement des couleurs des réglages de lumière dans le temps,
dans lequel, lorsque le niveau de dynamique est réduit, le niveau de différence de couleur est augmenté, et
- la détermination (506) des réglages de lumière selon le niveau de dynamique ajusté et le niveau de différence de couleur déterminé, et
- la commande (508) de la pluralité d'unités d'éclairage dans le temps selon les réglages de lumière déterminés.

2. Procédé (500) selon la revendication 1, dans lequel l'augmentation du niveau de différence de couleur comprend : l'augmentation, pour une ou plusieurs unités d'éclairage de la pluralité d'unités d'éclairage, du taux de changement des couleurs dans le temps.

3. Procédé (500) selon la revendication 1 ou 2, dans lequel l'augmentation du niveau de différence de couleur comprend : l'augmentation du nombre des couleurs par sélection des couleurs des réglages de lumière d'une palette de couleurs.

4. Procédé (500) selon la revendication 3, dans lequel le procédé (500) comprend en outre :
- la génération d'une pluralité de couleurs supplémentaires pour la palette de couleurs sur la base des couleurs de la palette de couleurs.

5. Procédé (500) selon la revendication 4, dans lequel la pluralité de couleurs supplémentaires sont générées par extrapolation ou interpolation des couleurs de la palette de couleurs.

6. Procédé (500) selon la revendication 4 ou 5, dans lequel le procédé (500) comprend en outre :
- le fait de déterminer si le niveau de différence de couleur peut être atteint à l'aide des couleurs de la palette de couleurs, et dans lequel l'étape consistant à générer la pluralité de couleurs supplémentaires pour la palette de couleurs est exécutée si le niveau de différence de couleur ne peut pas être atteint à l'aide des couleurs de la palette de couleurs.

7. Procédé (500) selon l'une quelconque revendication précédente, dans lequel le niveau de différence de couleur est diminué lorsque le niveau de dynamique est augmenté.

8. Procédé (500) selon l'une quelconque revendication précédente, dans lequel le procédé (500) comprend :
- l'augmentation du niveau de différence de couleur uniquement lorsque le niveau de dynamique est réduit en dessous d'un seuil.

9. Procédé (500) selon l'une quelconque revendication précédente, dans lequel le niveau de différence de couleur est déterminé en fonction du niveau de dynamique ajusté.

10. Procédé (500) selon l'une quelconque revendication précédente, dans lequel le procédé (500) comprend :
- l'obtention d'informations de position indiquant les emplacements et/ou orientations relatifs de la pluralité d'unités d'éclairage, et
- l'ajustement du niveau de différence de couleur sur la base des positions et/ou orientations relatives de la pluralité d'unités d'éclairage.

11. Procédé (500) selon l'une quelconque revendication précédente, dans lequel le procédé (500) comprend :
- l'obtention d'informations de position indiquant les emplacements et/ou orientations de la pluralité d'unités d'éclairage par rapport à un utilisateur, et
- l'ajustement du niveau de différence de couleur sur la base des emplacements et/ou orientations de la pluralité d'unités d'éclairage par rapport à l'utilisateur.

12. Procédé (500) selon l'une quelconque revendication précédente, dans lequel le procédé (500) comprend :
- l'ajustement du niveau de différence de couleur sur la base d'une ou de plusieurs propriétés du contenu multimédia.

13. Procédé (500) selon l'une quelconque revendication précédente, dans lequel l'entrée est une entrée utilisateur reçue par l'intermédiaire d'une interface utilisateur.

14. Produit-programme informatique pour un dispositif informatique, le produit-programme informatique comprenant un code de programme informatique pour réaliser le procédé (500) selon l'une quelconque revendication précédente lorsque le produit-programme informatique est exécuté sur une unité de traitement du dispositif informatique.

15. Dispositif de commande (102) permettant de commander une pluralité d'unités d'éclairage (110, 112, 114, 116) dans le temps selon des réglages de lumière, lesquels réglages de lumière sont basés sur le contenu multimédia restitué sur un dispositif de rendu multimédia (130), le dispositif de commande (102) comprenant :
- une unité de communication (104) configurée pour communiquer avec la pluralité d'unités d'éclairage (110, 112, 114, 116),
- une unité d'entrée (108) configurée pour recevoir une entrée indiquant un ajustement d'un niveau de dynamique, le niveau de dynamique indiquant un niveau de différence de la luminosité des réglages de la lumière dans le temps et/ou un taux de changement de la luminosité des réglages de lumière dans le temps,
- un processeur (106) configuré pour déterminer un niveau de différence de couleur basé sur le niveau de dynamique ajusté, dans lequel le niveau de différence de couleur indique un niveau de différence de couleurs des réglages de lumière dans le temps et/ou un taux de changement des couleurs des réglages de lumière dans le temps, dans lequel, lorsque le niveau de dynamique est réduit, le niveau de différence de couleur est augmenté, et pour ajuster les réglages de lumière sur la base du niveau de dynamique ajusté et du niveau de différence de couleur déterminé, et pour commander, par l'intermédiaire de l'unité de communication (104), la pluralité d'unités d'éclairage (110, 112, 114, 116) dans le temps selon des réglages de lumière déterminés.
